Europäisches Patentamt

(19) European Patent Office

Office européen des brevets

(11) Publication number: **0 102 794**
**A2**

## (12) EUROPEAN PATENT APPLICATION

(21) Application number: **83304797.0**

(22) Date of filing: **19.08.83**

(51) Int. Cl.³: **F 16 D 3/74**

(30) Priority: **23.08.82 US 410732**

(43) Date of publication of application:
**14.03.84 Bulletin 84/11**

(84) Designated Contracting States:
**DE FR GB IT**

(71) Applicant: **FARATHANE, INC.**
**14116 East Ten Mile Road**
**Warren Michigan 48089(US)**

(72) Inventor: **Kiefer, Henry**

**(Deceased)(US)**

(74) Representative: **Jones, Colin et al,**
**W.P. THOMPSON & CO. Coopers Building Church Street**
**Liverpool L1 3AB(GB)**

(54) **A one piece flexible coupling.**

(57) A one piece flexible coupling for resiliently connecting coaxial driving and driven shafts (17, 18) is formed entirely from a homogeneous high temperature resistant polyurethane to provide an axially elongated body having radially enlarged axial end portions (11, 12) and a coaxial radially reduced axially extending intermediate portion (13). A tunnel (14) extends coaxially through the body and is formed at its ends to provide splined sockets (15, 16) in said radially enlarged end portions for receiving splined ends of the driving and driven shafts respectively. The polyurethane is sufficiently hard and resistant to resilient deformation to provide essentially inelastic driving and driven engagement between the splined sockets in the radially enlarged end portions and splined ends of the driving and driven shafts. The intermediate portion is reduced radially to enable sufficient resilient yieldability to accommodate torsional shock during operation.

Fig-2

DESCRIPTION

A ONE PIECE FLEXIBLE COUPLING

This invention relates to flexible couplings for coaxially connecting high speed rotatable driving and driven shafts.

A typical conventional coupling of the above type comprises a flexible axially extending body of rubber or rubber-like material having a pair of hard plastic or metallic splined socket inserts recessed coaxially into its opposite ends and bonded therein. The socket inserts open axially endwise to receive the splined ends of driving and driven shafts and are sufficiently hard and unyielding to resist significant distortion by engagement with the splined shaft ends therein during operation under-load. The flexible body is sufficiently flexible to absorb torsional shock, as for example during sudden changes in load or rapid acceleration.

A difficulty with such structures is the cost of providing multiple parts, including the flexible body and two socket inserts, and the complex operation of inserting the sockets into the ends of the body and bonding them coaxially in place by heat or cement. Considerable precision is required to manufacture all of the parts, such that they can be assembled and bonded together coaxially within the desired tolerances, and even when the parts are precisely fabricated, difficulty is encountered in maintaining the necessary coaxial alignment of the parts in the finished coupling. Although the several parts can be aligned accurately in the forming mould, stress results during the moulding and curing or bonding operations in consequence of such factors as differential shrinkage and pressure and temperature changes acting on the several parts of different materials. After the coupling is removed from the mould and cooled, the two socket inserts and the plastic body may or may not remain in coaxial alignment. Many couplings must then be rejected, resulting in waste of material and loss of moulding time.

If the two splined socket inserts are not in coaxial alignment with the plastic body during high speed operation of the driving and driven shafts, as for example in the neighbourhood of 3600 rpm, the resulting severe vibration rapidly destroys the coupling or the bearing supports for the shafts.

An important object of the present invention is to provide such a coupling that avoids the above noted disadvantages and permits simplicities and economies of fabrication that have not been possible heretofore.

Another and more specific object is to provide a one piece coupling comprising an axial body of hard resilient plastic material, such as a comparatively high temperature resistant polyurethane, having radially enlarged ends formed with coaxial splined sockets. Although high temperature is usually not an operating consideration, the high temperature resistant polyurethanes are sufficiently hard that the sockets within the enlarged ends provide comparatively rigid inelastic engagement with the splined ends of the driving and driven shafts inserted therein. The desired torsional flexibility for an intermediate portion of the body between the enlarged ends is achieved by reducing the outer diameter of the intermediate portion between the enlarged ends, and preferably also by providing a central opening or tunnel through the body.

In consequence of such a structure, the entire coupling can be readily formed in one piece entirely from a homogeneous plastic by a one step injection moulding operation, whereby coaxial alignment of the splined sockets, tunnel and body portions is assured by the moulding operation; additional steps for inserting and bonding socket inserts into the ends of a flexible body are avoided; comparatively inelastic engagement with the splined ends of coaxial driving and driven shafts is achieved; yet by virtue of the central opening or tunnel and the reduced outer diameter of the intermediate body portion, adequate shock absorbing torsional resiliency is achieved.

Other objects of this invention will appear in the following description and appended claims, reference being had to the accompanying drawings forming a part of this specification wherein like reference characters designate corresponding parts in the several views.

Although the prior art is replete with flexible couplings, no coupling comparable to the structure of the present invention, nor susceptible of its simplicity and economy of manufacture, is known to applicant. U.S. Patents to Reuter, 2,969,656, and to Palmer, 3,423,957, are typical of the prior art. The former patent employs a resilient polyurethane body to achieve torsional flexibility and to space multiple part metallic devices for engaging driving and driven shafts. The Palmer patent employs a sleeve type coupling that can be fabricated from a plastic, but is not concerned with torsional flexibility and does not provide an intermediate body portion of reduced outer diameter to achieve the torsional flexibility of the present invention while at the same time providing essentially inelasticity for the splined shaft engaging means or sockets.

In other words, the prior art does not teach the concept of forming a unitary coupling entirely from an inherently resilient hard plastic material to provide comparatively heavy large diameter inelastic splined ends spaced by an intermediate portion of sufficiently reduced outer diameter to achieve the desired torsional flexibility, such that the entire coupling can be formed in a simple one step injection moulding operation.

The present invention will now be described, by way of example only, with reference to the accompanying drawings, in which:-

Figure 1 is an elevational view of a coupling embodying the present invention;

Figure 2 is a longitudinal midsectional view through the coupling of Figure 1;

Figure 3 is an elevation taken from the right end of Figure 1; and Figure 4 is an elevation taken from the left end of Figure 1.

It is to be understood that the invention is not limited in its application to the details of construction and arrangement of parts illustrated in the accompanying drawings, since the invention is capable of other embodiments and of being practised or carried out in various ways. Also it is to be understood that the phraseology or terminology employed herein is for the purpose of description and not of limitation.

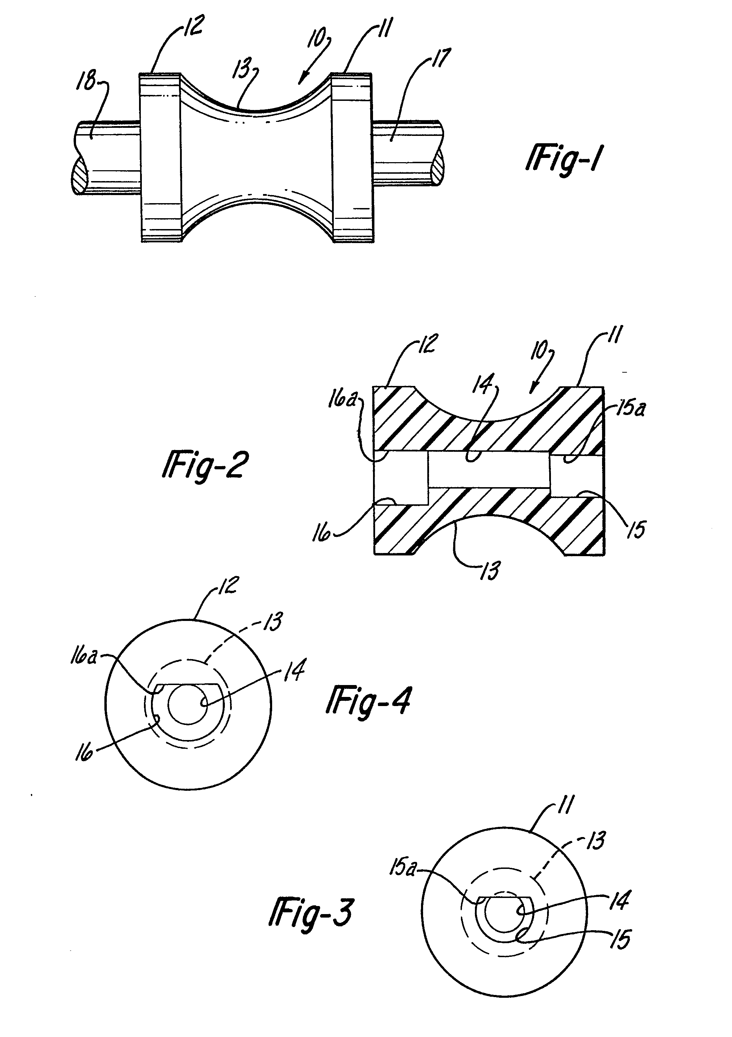

Referring to the drawings, the coupling illustrated in Figure 1 comprises a homogeneous one piece injection moulded tubular body 10 of high temperature resistant polyurethane

- 4 -

having axially opposite radially enlarged ends 11 and 12 spaced by an intermediate portion 13 of reduced outer diameter. The outer peripheral surfaces of the ends 11 and 12 are circularly cylindrical and the outer surface of the intermediate portion 13 is circular in transverse section. In the axial midsectional view of Figure 2, the outer surface of the reduced intermediate portion 13 is scalloped or curved to extend from a minimum outer diameter adjacent to its mid-region to the maximum diameters of the enlarged ends 11 and 12.

Extending centrally through the body 10 is a cylindrical tunnel or opening 14 formed at its axially opposite ends 15 and 16 to provide splined sockets for the reception of the splined ends of coaxial driving and driven shafts 17 and 18 respectively. The body 10 is formed symmetrically about the major longitudinal axis of the tunnel 14, such that the latter and the ends 11 and 12 and scalloped intermediate portion 13 are all coaxial with each other.

In accordance with the foregoing, the unitary moulded body 10 may be formed by a one-step injection moulding operation with the sockets 15 and 16 aligned precisely so as to receive the splined ends of the coaxial shafts 17 and 18 therein and to maintain their coaxial alignment during high speed operation. By eliminating socket inserts, any shrinkage that results as the moulded plastic cools is uniform and the coaxial alignment of the sockets 15 and 16 and body portions 11, 12 and 13 is maintained. By virtue of the comparatively hard high temperature resistant polyurethane, and the radial and axial dimensions of the portions 11 and 12 around the sockets 15 and 16, the latter provide comparatively rigid inelastic engagement with the splined ends of the shafts 17 and 18.

The splined sockets 15 and 16 in the present instance are illustrated in Figures 3 and 4 as being generally of the same diameter as their respective shafts 17 and 18, but are provided with flats 15a and 16a for effecting the desired driving and driven engagement. The sockets 15 and 16 are of different diameters in order to accommodate shafts 17 and 18 of different diameters. As long as shafts 17 and 18 are maintained in coaxial alignment, the out-of-roundness of the sockets 15 and 16 at the flats 15a and 16a causes no problem during ordinary high speed rotation.

If desired however the splined sockets 15 and 16 may be arranged symmetrically about their common axis in accordance with the numerous splines known to the art. Furthermore, the splined sockets 15, 16 are merely representative of splined means. Obviously the tunnel 14 could be eliminated and other well known splined means could replace the sockets 15 and 16 to achieve the advantages of the present invention.

The tunnel 14 and the reduced outer diameter of the intermediate portion 13 cooperate to achieve the desired operating flexibility for the body 10. The flexibility is of course determined by the cross sectional area and length of the intermediate portion 13. Although the torsional flexibility is proportional to length, it is desirable to minimize length in order to reduce weight and the cost of the plastic material. Accordingly it is important to reduce the cross sectional area of the intermediate portion 13, as described herein.

Actual dimensions as well as the physical characteristics of the plastic material will vary considerably, depending upon the load to be transmitted by the coupling and the operating conditions desired. Utilizing a polyurethane having the specifications stated below with a coupling 10 having an overall length of about 32 mm, wherein the outer diameter and axial length of each enlarged end portion 11 or 12 are about 22 mm and 6 mm respectively, the splined sockets 15 and 16 are each about 8 mm deep axially and about 8 mm and 9.5 mm respectively in diameter, the spline flats 15a and 16a are about 7 mm and 8 mm wide respectively, the diameter of the tunnel 14 is about 5 mm, the minimum outer diameter of the reduced portion 13 is about 12.5 mm, and its radius of curvature in any axial plane as seen in Figure 2 is about 12.5 mm, the shafts 17 and 18 with their splined ends secured within the socket 15 and 16 may be rotated approximately 180° with respect to each other about their common axis without significantly deforming the sockets 15 and 16 and without causing permanent deformation of the intermediate portion 13. In other words, during such rotation, the torque applied by each shaft 17 or 18 to its respective socket 15 or 16 will rotate the associated enlarged end 11 or 12 essentially to the same extent that the shafts 17 and 18 are rotated relative to each other. All torsional yielding will be accommodated essentially by the reduced diameter intermediate portion 13 within the elastic limits of the polyurethane material for the body 10.

Numerous polyurethanes having the necessary toughness, hardness, resiliency, and resistance to shearing and permanent deformation are well known to the art. The polyurethanes are particularly desirable and are preferred for use with the coupling shown, although obviously other plastics having similar characteristics may be used with varying degrees of success, depending upon the resilient yieldability required for the reduced portion 13 and the hardness and resistance to yielding required for the sockets 15 and 16.

The physical characteristics of a typical urethane used in the manufacture of the injection moulded body 10 are tabulated as follows:

| PROPERTIES | VALUES | ASTM TEST METHOD |
|---|---|---|
| Specific Gravity | 1.19 | |
| Tested at 23° ± 2°C | | |
| Hardness, Shore D/A | 60/95 | D2240 |
| Ultimate Tensile, MPa (psi) | 42.0(6100) | D412 |
| Ultimate Elongation, % | 550 | -- |
| Tensile Stress at | | |
| 100% Elongation, MPa (psi) | 19.0(2750) | |
| 300% Elongation, MPa (psi) | 22.5(3260) | |
| Tensile Set at | | |
| 100% Elongation, % | 18 | |
| Tear, kN/m, (pi) | 175(1000) | D624 — Die C |
| Compression Set | | D395 — B Method |
| 22 hr. at 70°C | 33 | |
| 22 hr. at 100°C | 37 | |
| Tested at 160°C ± 2°C | | |
| Ultimate Tensile, MPa (psi) | 11.0(1600) | D412 |
| Ultimate Elongation, % | 500 | |
| 100% Modulus, MPa (psi) | 8.0(1160) | |
| Tear, kN/m (pi) | 40(228) | D624 — Die C |

| PROPERTIES | | VALUES | | ASTM TEST METHOD |
|---|---|---|---|---|
| Oven Aged, Max % Decrease | | | | D471 |
| Temperature/Time | 100°C/70hr | 177°C/70hr | 177°C/28day | |
| Hardness (points) | 3 | -5 | -5 | |
| Tensile | 10 | 50 | 60 | |
| Elongation | 10 | 10 | 30 | |
| Fluid Aged, Max % Decrease | | | | D471 |
| Type ASTM | | #1 oil | #3 oil   70 hr. at 100°C | |
| Hardness (points) | | -3 | -3 | |
| Tensile | | 10 | 10 | |
| Elongation | | 10 | 10 | |
| Volume Swell % (increase) | | 1 | 7 | |
| Resistance to Ozone | | 0 | | Ford Method BP1-1 |
| Brittleness | | -56°C | | D746 |

Pull Rate 20"/min – Dumbells, All Hardness Values $\pm 5$ points, All Properties $\pm 10\%$

Although the foregoing are typical physical properties, various other adaptations of the concept described herein may require compounds quite different in character to accommodate specific torque requirements, temperatures, dimensions, and other physical characteristics.

. . . . . . . . . . . . . . . . . . . . . . . . . . . . . . . . . . . . . . . . . . . . . . . . . . . . . . . . . .

## CLAIMS

1. A one-piece flexible coupling comprising a moulded body (10) having a major central axis, splined recess means (15, 16) in the axially opposite ends of said body opening axially endwise for engaging splined ends of driving and driven shafts (17, 18) in coaxial alignment with said major axis, said body (10) having coaxial shaft-supporting portions (11, 12) at axially opposite ends defining said recess means, each shaft-supporting portion extending radially outwardly from the recess means defined thereby to outer peripheral portions coaxial with said axis, and said body (10) having an axially extending intermediate portion (13) coaxially spacing said shaft-supporting portions (11, 12), characterized in that:

said body comprises a material having the physical characteristics of a high temperature resistant polyurethane sufficiently hard and inelastic to avoid significant deformation of said recess means during operating engagement with said driving (17) and driven (18) shafts, and means for enabling torsional flexibility of said intermediate portion of said body comprising the cross sectional area of said intermediate portion transverse to said axis being reduced with respect to the corresponding cross sectional area of said shaft-supporting portions (11, 12).

2. A coupling according to claim 1, in which said body has a tunnel (14) extending coaxially therethrough and formed adjacent to its axially opposite ends to provide said splined recess means (15, 16) in said shaft-supporting portions (11, 12) respectively.

3. A coupling according to claim 2, in which the exterior surface of said intermediate portion (13) has a minimum diameter adjacent to its axial mid-region, the outer diameter of said intermediate portion progressively increasing from said mid-region in axially opposite directions to said outer peripheral portions.

4. A coupling according to claim 3, in which said plastic material is homogeneous throughout said body (10).

5. A coupling according to claim 4, in which said body (10) is formed entirely of plastic material comprising a comparatively high temperature resistant polyurethane.

6. A coupling according to claim 1, in which the exterior surface of said intermediate portion (13) has a minimum diameter adjacent to its axial mid-region, the outer diameter of said intermediate portion progressively increasing from said mid-region in axially opposite directions to said outer peripheral portions (11, 12).

7. A coupling according to claim 6, in which said plastic material is homogeneous throughout said body (10).

8. A coupling according to claim 7, in which said body (10) is formed entirely of plastic material comprising a comparatively high temperature resistant polyurethane.

0102794

1/1

*Fig-1*

*Fig-2*

*Fig-4*

*Fig-3*